# FASCICULE DE BREVET EUROPEEN

(11) **EP 1 713 667 B1**
(45) Date de publication et mention de la délivrance du brevet: **14.11.2007**
(21) Numéro de dépôt: 05701550.5
(22) Date de dépôt: 19.01.2005
(51) Int. Cl.: B60R 25/04

(54) **DISPOSITIF DE DEMARRAGE MOTEUR POUR VEHICULE AUTOMOBILE**
MOTORSTARTVORRICHTUNG FÜR KRAFTFAHRZEUG
ENGINE STARTING DEVICE FOR MOTOR VEHICLE

(30) Priorité: 29.01.2004 FR 0400814
(43) Date de publication de la demande: 25.10.2006
(73) Titulaire: VALEO SECURITE HABITACLE, 94042 Creteil Cédex (FR)
(72) Inventeur: CALOR, Hervé, Valéo Sécurité Habitacle, Europarc, F-94042 Créteil Cedex (FR); CANARD, Louis, Valéo Sécurité Habitacle, Europarc, F-94042 Créteil Cedex (FR); GUYON, Laurent, Valéo Sécurité Habitacle, Europarc, F-94 042 Créteil Cedex (FR)
(86) Numéro de dépôt international: PCT/EP2005/050207
(87) Numéro de publication internationale: WO 2005/075263

(56) Documents cités:
- DE-A- 10 014 207
- DE-A- 10 047 967
- DE-C- 19 641 898
- FR-A- 2 759 109
- FR-A- 2 789 632

## Description

La présente invention concerne un dispositif qui permet de commander le démarrage d'un moteur, et qui fonctionne en faisant coopérer un support de données amovible, formant clé électronique, avec une unité de commande fixe, formant lecteur.

L'invention trouve une application particulièrement avantageuse dans le domaine automobile.

Il est connu d'utiliser l'identification d'un support de données amovible, par un lecteur sans contact fixe, pour autoriser la mise en fonctionnement d'un moteur de véhicule automobile. Le support de données constitue une sorte de clé électronique, qui se substitue à la classique dé mécanique, pour assurer notamment la fonction antivol du véhicule dans lequel est intégrée la partie lecteur du système. Le lecteur sans contact joue quant à lui sensiblement le rôle habituellement dévolu au barillet de direction, en commandant l'activation ou la désactivation des circuits d'alimentation électrique et de démarrage du véhicule automobile, ainsi que le blocage ou le déblocage de la colonne de direction.

Dans ce type d'application, un tel support de données se présente généralement sous la forme d'un badge électronique au format carte de crédit. Les données d'identification qui y sont contenues concernent habituellement le véhicule automobile associé et/ou ses utilisateurs potentiels. Le lecteur sans contact associé dispose quant à lui d'un logement ouvert qui est conformé pour pouvoir recevoir longitudinalement le badge électronique. Il est par ailleurs communément implanté dans la planche de bord du véhicule automobile.

Dans la pratique, la procédure de démarrage débute par l'insertion manuelle du badge électronique dans le lecteur sans contact. Cette opération déclenche alors une séquence d'identification qui est destinée à permettre au lecteur de contrôler l'authenticité du support de données. Une fois le badge électronique reconnu, le lecteur commande l'activation du circuit électrique de démarrage moteur et, le cas échéant, le déblocage de la colonne de direction du véhicule automobile. Dès lors, l'utilisateur n'a plus qu'à actionner le bouton de démarrage qui est généralement situé près du volant, pour lancer la mise en route effective du moteur.

A l'évidence, cette configuration complique la tâche de l'utilisateur puisqu'elle lui impose d'intervenir manuellement à deux endroits distincts, à savoir au niveau du lecteur sans contact et au niveau du bouton de démarrage. Ceci est d'autant plus vrai que les endroits en question sont souvent relativement distants l'un de l'autre dans la pratique. En effet, le bouton de démarrage est généralement implanté à porter de main pour des raisons de sécurité, c'est-à-dire à proximité du volant, tandis que le lecteur sans contact, de par son encombrement bien supérieur, a plutôt tendance à être intégré dans une partie plus éloignée de la planche de bord.

Pour remédier à cette difficulté, on a pensé regrouper les fonctions d'identification et de démarrage en un même point, en positionnant en quelque sorte le bouton de commande du démarrage moteur au fond du logement du lecteur sans contact ; le badge électronique une fois inséré servant alors de bouton poussoir en plus de sa fonction d'identifiant.

Dans la pratique, le début de la procédure de démarrage consiste de manière dassique à insérer longitudinalement le badge dans la fente du lecteur, puis à l'introduire à l'intérieur du logement en exerçant une poussée axiale. Une fois l'étape de reconnaissance achevée, l'utilisateur appuie à nouveau axialement au niveau de l'extrémité du badge qui fait saillie par rapport au lecteur, de manière à actionner le contacteur qui est implanté au fond du logement et dont la fonction est de commander le démarrage effectif du moteur.

"Ce type de dispositif de démarrage présente toutefois l'inconvénient d'être essentiellement adapté aux badges électroniques tels que précédemment décrits, c'est-à-dire en forme de parallélépipèdes plats. Or, leurs relativement grandes dimensions comparées à leur faibles épaisseurs les rendent fragiles, notamment en flexion, et pas toujours pratiques à transporter.

De plus, l'insertion de ce type de badges s'avère toujours difficile puisque l'ouverture ménagée à la surface du lecteur est en forme de fente, et que le logement comporte assez souvent des rails de guidage qui, bien que fort utiles pour guider le badge une fois celui-ci engagé à l'intérieur du lecteur, n'en encombrent pas moins l'ouverture du logement au moment de l'introduction.

Un dispositif de démarrage selon le préambule de la revendication 1 est connu du document FR-A-2 759 109.

Aussi le problème technique à résoudre, par l'objet de la présente invention, est de proposer un dispositif de démarrage pour véhicule automobile qui permettrait d'éviter les problèmes de l'état de la technique en offrant notamment une solidité et une facilité d'utilisation sensiblement améliorées au support de données.

La solution au problème technique posé consiste, selon la présente invention, en un dispositif de démarrage selon la revendication 1.

Le fait que le support de données soit en mesure d'être solidarisé de manière amovible contre une paroi externe de l'unité de commande signifie qu'il est à même d'être immobilisé plus ou moins temporairement, indifféremment au contact ou à proximité directe d'une quelconque partie extérieure de l'unité de commande.

Il est également à noter que la mise en oeuvre du moteur, qui résulte de l'activation du contacteur monté dans l'unité de commande, concerne aussi bien le démarrage que l'arrêt dudit moteur.

Avec une telle configuration, la procédure de démarrage peut avantageusement être réalisée en ne manipulant que le support de données, puisque d'une part, la phase d'identification est déclenchée par la mise en place du support de données sur l'unité de commande, et que d'autre part, l'activation du contacteur est provoquée par une action directe sur ledit support de données. Cette action exercée par l'utilisateur peut être de toute nature imaginable.

L'invention telle qu'ainsi définie présente l'avantage de pouvoir être aisément mise en oeuvre avec un support de données de forme quelconque, car il n'est plus question ici d'introduction à l'intérieur d'un logement mais d'une simple mise en place en surface.

Le principe d'insertion, inhérent aux dispositifs de démarrage de l'art antérieur, sous-entend en effet la nécessité d'une certaine complémentarité formelle entre les deux éléments à emboîter. Cette obligation a ainsi fortement contribué à la généralisation des formes régulières et linéaires au niveau des parois du support de données s'étendant parallèlement à la direction d'introduction, généralisation qui a conduit à l'avènement inexorable des badges électroniques.

Le principe de juxtaposition utilisé dans le cadre de l'invention n'impose pas ce type de contrainte, de sorte qu'il n'est plus indispensable de se limiter à des formes sensiblement parallélépipédiques et relativement plates.

Il est ainsi possible de concevoir des supports de données aux formes variées, et notamment beaucoup plus compactes et/ou sensiblement moins minces. En tout état de cause, cela permet d'adopter des formes offrant une plus grande solidité structurelle, mais également des formes mieux adaptées au transport de ce type d'objets, notamment dans les poches d'un pantalon.

Un dispositif de démarrage selon l'invention s'avère en outre considérablement plus simple à mettre en oeuvre, en raison du fait que la mise en place d'un support de données sur une surface extérieure d'un unité de commande constitue une opération infiniment moins compliquée que l'insertion d'un badge dans la fine fente d'un lecteur sans contact. L'accessibilité est en effet maximale et le geste ne requiert pas une précision insurmontable.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:

La figure 1 est une vue en perspective de dessus d'un dispositif de démarrage exemplaire.

La figure 2 illustre plus particulièrement le support de données amovible du dispositif de démarrage de la figure 1.

La figure 3 représente spécifiquement l'unité de commande fixe du dispositif de démarrage de la figure 1.

La figure 4 est une vue en coupe montrant le support de données de la figure 2 et l'unité de commande de la figure 3 avant leur assemblage.

La figure 5 constitue une vue similaire à la figure 4, mais dans laquelle le support de données est en début de phase de fixation sur l'unité de commande.

La figure 6 est une vue similaire aux figures 4 et 5, mais dans laquelle le support de données est en fin de phase de fixation sur l'unité de commande.

La figure 7 constitue une vue similaire aux figures 4 à 6, mais dans laquelle le support de données et l'unité de commande sont représentés au cours de la phase de démarrage.

La figure 8 est une vue similaire aux figures 4 à 7, mais dans laquelle le support de données et l'unité de commande sont en fin de phase de verrouillage.

La figure 9 illustre l'intérieur du support de données 10 de la figure 2, en vue de dessous.

La figure 10 montre la face arrière du support de données de la figure 2.

La figure 11 est une coupe partielle, en perspective de dessus, d'un dispositif de démarrage selon un mode de réalisation de l'invention.

La figure 12 représente plus particulièrement l'unité de commande du dispositif de démarrage de la figure 11.

La figure 13 montre le dispositif de démarrage de la figure 11 en coupe transversale, dans une phase inactive.

La figure 14 est une vue similaire à la figure 13, mais dans laquelle le dispositif de démarrage est dans une phase active.

La figure 15 fait apparaître, en coupe partielle, une clé mécanique en début de phase d'insertion dans l'unité de commande de la figure 12.

La figure 16 constitue une vue similaire à la figure 15, mais dans laquelle la clé mécanique est en fin de phase d'insertion dans l'unité de commande.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

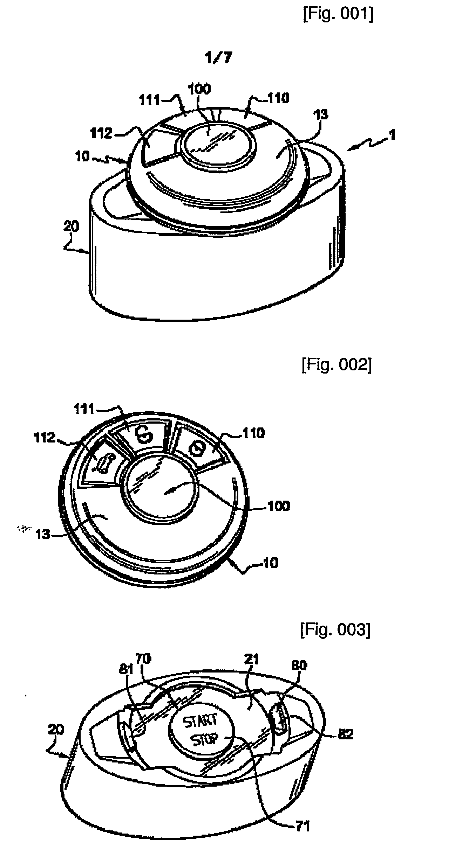

La figure 1 illustre un dispositif de démarrage 1 exemplaire qui est destiné à commander la mise en fonctionnement d'un moteur de véhicule automobile. Ainsi qu'on peut le voir sur cette représentation, le dispositif de démarrage 1 est essentiellement composé d'un support de données portatif 10 qui est en mesure d'être couplé, le temps de l'utilisation du véhicule, à une unité de commande 20 devant être intégré à la planche de bord du véhicule automobile.

On remarque tout de suite sur les figures 1 et 2 que le support de données 10 présente une forme de galet qui contraste avec les badges électroniques de l'art antérieur. Cette particularité constitue un véritable atout esthétique pour les dispositifs de démarrage.

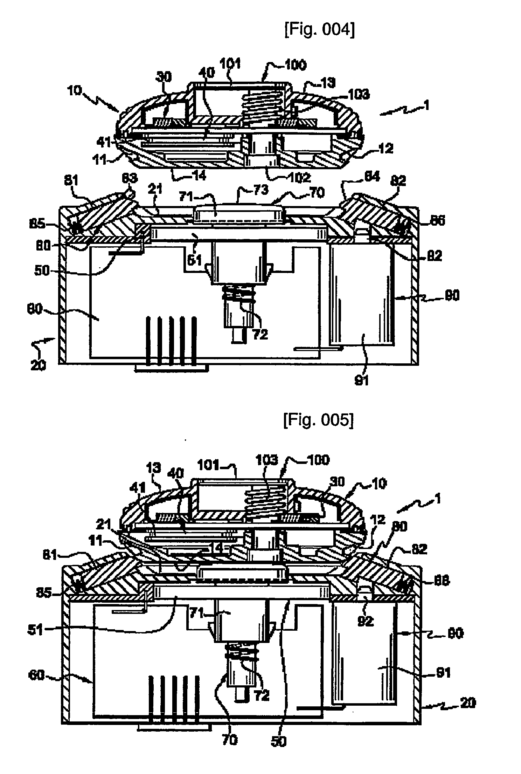

Conformément aux figures 4 à 8, le support de données 10 est doté de moyens de stockage 30 pour des données représentatives du véhicule automobile, mais également pour des données caractéristiques de son ou ses utilisateurs. Il est à noter que c'est le premier type de données qui est avant tout voué à l'identification proprement dite du support de données 10 dans le cadre de la procédure de démarrage moteur, tandis que le second est plus particulièrement destiné à personnaliser certains réglages intérieurs du véhicule automobile, tels que la position des sièges électriques et/ou des rétroviseurs, le réglage de la climatisation et/ou de la radio, etc.

Le support de données 10 est par ailleurs pourvu de moyens de transmission sans contact 40 qui sont destinés à l'échange de données avec l'unité de commande 20, et notamment à la transmission des données contenues dans les moyens de stockage 30. Ces moyens de d'émission/réception comportent en particulier une antenne 41 qui est ici adaptée pour fonctionner en radiofréquence.

L'unité de commande 20 dispose quant à elle de moyens de communication sans contact 50 qui sont destinés à l'échange de données avec le support de données 10, et notamment à la lecture des données contenues dans les moyens de stockage 30. Mais à la différences des moyens de transmission 40, les moyens de communication 50 sont à même de fonctionner en lecture/écriture de manière à pouvoir jouer pleinement leur rôle de lecteur. Ils comportent notamment une antenne 51 de type radiofréquence afin de pouvoir se coupler avec l'antenne 41 du support de données 10 en vue d'échanger des données.

L'unité de commande 20 comporte de plus des moyens de traitement de données 60 permettant d'autoriser la mise en oeuvre du moteur équipant le véhicule automobile. Ils sont matérialisés sur les figures 4 à 8 par une carte électronique représentée de manière schématique.

L'unité de commande 20 est dotée en outre d'un contacteur 70 permettant de commander la mise en oeuvre effective du moteur, c'est-à-dire sa mise en route et son arrêt.

Conformément à un premier aspect, le support de données 10 est à même d'être solidarisé de manière amovible contre une paroi externe de l'unité de commande 20, au niveau d'une portion de surface dite de positionnement 21, qui est parfaitement visible sur la figure 3.

Pour cela, et selon une particularité, l'unité de commande 20 dispose de moyens de fixation 80 qui sont en mesure de maintenir le support de données 10 en regard de la surface de positionnement 21.

Dans ce mode particulier, choisi uniquement à titre d'exemple, les moyens de fixation 80 sont dotés de deux éléments de maintien 81, 82 qui sont positionnés en vis-à-vis et qui sont montés mobiles en déplacement. Cette mobilité s'exerce entre une position déployée dans laquelle l'extrémité distale 83, 84 de chaque éléments de maintien 81, 82 est à même de coopérer par emboîtement avec une portion d'ancrage 11, 12 du support de données 10, de forme sensiblement complémentaire, et une position rétractée dans laquelle chacune desdites extrémités distales 83, 84 est disposée à distance de chacune desdites portions d'ancrage 11,12 correspondantes. Chaque élément de maintien 81, 82 est par ailleurs entraîné en déplacement de sa position rétractée à sa position déployée, par des moyens de rappels élastique 85, 86 se présentant ici sous la forme de ressorts de compression.

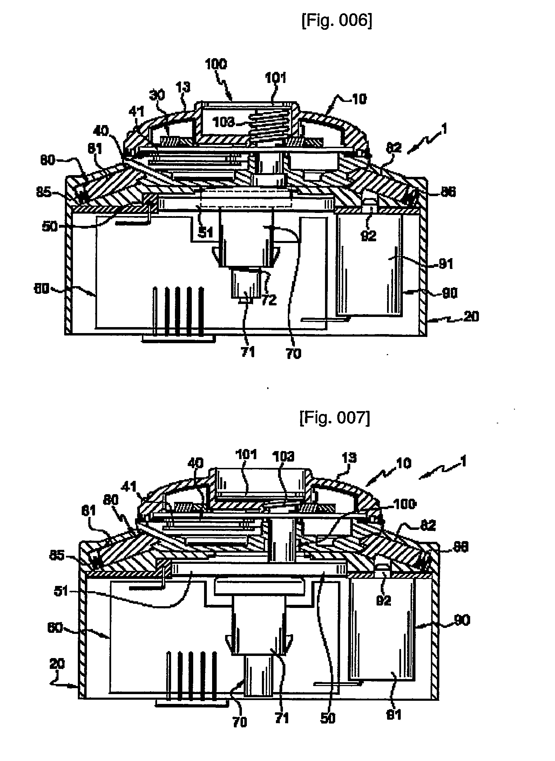

Le montage du support de données 10 sur l'unité de commande 20 s'effectue en procédant tout d'abord à un rapprochement relatif, sensiblement par translation, suivant une direction sensiblement perpendiculaire à la surface de positionnement 21 (figure 4 à figure 5). Le support de données 10 est ensuite clippé par l'intermédiaire des moyens de fixation 80 ; les deux éléments de maintien 81, 82 s'effaçant alors grâce à leur mobilité lors de l'engagement du fond dudit support de données 10 (figure 5), puis se déployant à nouveau lorsque leurs extrémités distales 83, 84 s'emboîtent dans les portions d'ancrage 11, 12 (figure 6). Le support de données 10 et l'unité de commande 20 sont alors solidaires l'un de l'autre.

De préférence, la désolidarisation du support de données 10 par rapport à l'unité de commande 20 s'effectue suivant un mouvement de nature et/ou de direction distinct de celui ayant conduit à leur assemblage. Dans le cas présent, la désolidarisation est réalisée par rotation autour d'un axe qui est parallèle à la direction de montage, c'est-à-dire sensiblement perpendiculaire à la surface de positionnement 21.

Pour cela chaque portion d'ancrage 11, 12 est avantageusement pourvue de bords latéraux inclinés par rapport à la direction d'engagement des éléments de maintien 81, 82. Ainsi orientés, ces bords latéraux forment des sortes de rampes qui sont aptes à coopérer par glissement avec les extrémités distales 83, 84 de chaque élément de maintien 81, 82 lorsque le support de données 10 est entraîné en rotation par rapport à l'unité de commande 20. L'ensemble est agencé de manière à ce que chaque glissement relatif soit en mesure de repousser chaque élément de maintien 81, 82 jusqu'à sa position rétractée, permettant ainsi de dégager le support de données 10.

Bien entendu, le mode de fixation détaillé ici ne constitue qu'un exemple particulier. Toute autre méthode de fixation réversible connue pourrait par conséquent être utilisée de manière équivalente, comme par exemple un système à baïonnettes, ou un système dans lequel les éléments de maintien 81, 82 seraient solidaires du support de données 10, tandis que les portions d'ancrage 11, 12 seraient ménagées dans l'unité de commande 20. Il en est de même en ce qui concerne les moyens employés pour désolidariser le support de données 10 de l'unité de commande 20.

Selon une autre particularité, visible sur les figures 4 à 8, l'unité de commande 20 est dotée de moyens de verrouillage 90 qui sont en mesure d'interdire toute désolidarisation du support de données 10, lorsque ce dernier est maintenu par les moyens de fixation 80 en regard de la surface de positionnement 21.

De manière particulièrement avantageuse, les moyens de verrouillage 90 sont à même de bloquer la mobilité d'au moins un élément de maintien 82, en l'immobilisant en position déployée.

Conformément à une autre caractéristique avantageuse, les moyens de verrouillage 90 sont aptes à être mis en oeuvre avant le démarrage effectif du moteur du véhicule automobile.

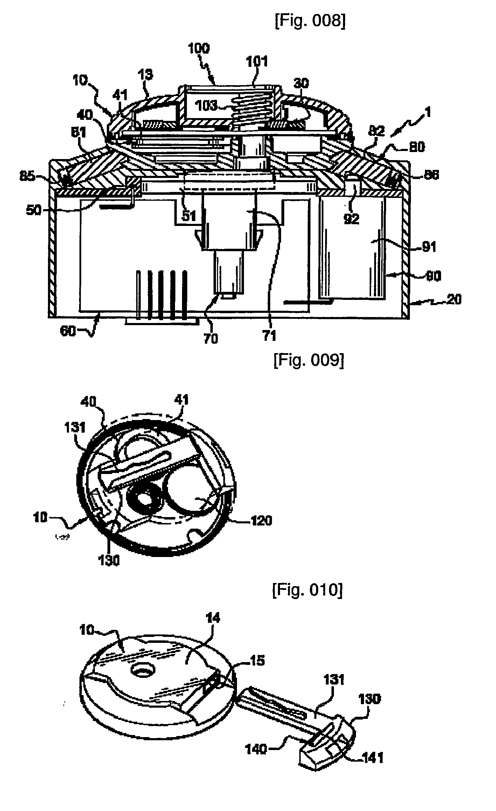

Dans cet exemple de réalisation, les moyens de verrouillage 90 sont constitués par un solénoïde 91 dont le plongeur 92 est à même de coopérer par blocage avec l'élément de maintien 82 (figure 8).

Conformément à un second aspect, l'activation du contacteur 70 s'effectue en agissant directement sur le support de données 10 lorsque ce dernier est solidarisé à ladite unité de commande 20. A cet égard, il est à noter que l'action exercée par l'utilisateur peut à priori être de toute nature imaginable.

Mais de manière préférentielle, l'activation du contacteur 70 s'effectue en déplaçant au moins une partie du support de données 10 par rapport à l'unité de commande 20, lorsque ledit support de données 10 est solidarisé à ladite unité de commande 20. Cela signifie que l'activation peut être commandée indifféremment par le déplacement d'une unique partie du support de données 10, par les déplacements plus ou moins simultanés voire successifs de plusieurs parties distinctes, ou par le déplacement dudit support de données 10 dans son ensemble. Chaque déplacement peut être effectué suivant un mouvement de nature quelconque, comme par exemple une translation, une rotation ou une combinaison quelconque de ce types de mouvements.

Dans le cas présent, l'activation du contacteur 70 est plus spécifiquement réalisée en exerçant une poussée sur au moins une partie du support de données 10, lorsque ce dernier est solidarisé à l'unité de commande 20.

Quoi qu'il en soit, le dispositif de démarrage des figures 1 à 8 représent un dispositif exemplaire.

Celui-ci est tout d'abord remarquable en ce que le contacteur 70 de l'unité de commande 20 est doté d'un élément de commande 71 qui est monté mobile en déplacement entre une position relevée (figures 4 et 5) rendant inactive la fonction de démarrage, et une position enfoncée (figure 7) rendant active ladite fonction de démarrage. Le contacteur 70 comporte en outre des moyens de rappel élastique 72 qui se présentent ici sous la forme d'un ressort de compression à même d'entraîner en déplacement l'élément de commande 71 de sa position enfoncée (figure 7) à sa position relevée (figures 4 et 5). L'élément de commande 71 est par ailleurs pourvu d'une extrémité libre 73 qui, en position relevée, débouche de manière sensiblement affleurante au niveau de la surface de positionnement 21 et qui, en position enfoncée, est complètement insérée à l'intérieur de l'unité de commande 20 (figure 7).

Cet exemple est en outre caractérisé par le fait que le support de données 10 comporte un bouton poussoir 100 dont deux extrémités libres 101, 102 débouchent respectivement au niveau de la face avant 13 et de la face arrière 14 dudit support de données 10.

Ce bouton poussoir 100 est monté mobile en déplacement entre une position relevée (figures 4, 5, 6, 8) et une position enfoncée (figure 7). L'ensemble est agencé de manière à ce qu'en position relevée, le bouton poussoir 100 soit intégré sensiblement en totalité à l'intérieur du support de données 10, avec au moins son extrémité libre avant 101 s'étendant de manière sensiblement affleurante par rapport à la face avant 13. En position enfoncée par contre, l'agencement de l'ensemble fait que l'extrémité libre arrière 102 du bouton poussoir 100 s'étend en saillie par rapport à la face arrière 14.

Le support de données 10 comporte en outre des moyens de rappel élastique 103 qui se présentent là encore sous la forme d'un ressort de compression à même d'entraîner en déplacement le bouton poussoir 100 de sa position enfoncée (figure 7) à sa position relevée (figures 4, 5, 6, 8).

Ainsi qu'on peut le voir sur la figure 7, le déplacement du bouton poussoir 100 entre sa position relevée et sa position enfoncée est en mesure d'entraîner le déplacement de l'élément de commande 71 entre sa position relevée et sa position enfoncée, lorsque le support de données 10 est solidarisé au niveau de la surface de positionnement 21 de l'unité de commande 20.

De manière particulièrement avantageuse, le bouton poussoir 100 du support de données 10 coopère par contact permanent avec l'élément de commande 71 de l'unité de commande 20, lorsque ledit support de données 10 est solidarisé au niveau de la surface de positionnement 21 de ladite unité de commande 20.

Cela signifie qu'il n'existe pas de course morte entre bouton poussoir 100 et l'élément de commande 71, et donc que l'actionnement dudit bouton poussoir 100 génère la mise en oeuvre immédiate dudit élément de commande 71. Cette caractéristique est permise par le fait que le support de données 10 vient déjà en contact avec l'extrémité 73 de l'élément de commande 71, avant sa fixation sur l'unité de commande 20 (figure 5). Le clippage du support de données 10 dans les moyens de fixation 80 provoque donc un léger enfoncement de l'élément de commande 71 qui, combiné à l'action du moyen de rappel élastique 72, garantit le contact entre l'extrémité 73 et la face arrière 14 du support de données 10, et notamment l'extrémité libre arrière 102 du bouton poussoir 100.

Ainsi qu'on peut le voir sur les figures 1 et 2, le support de données 10 est avantageusement doté de moyens de verrouillage à distance 110 d'au moins un ouvrant du véhicule automobile, ainsi que de moyens de déverrouillage à distance 111 d'au moins un ouvrant du véhicule automobile. Dans cet exemple les fonctions de verrouillage et de déverrouillage concernent chacune toutes les portes. Elles sont commandées par deux boutons distincts, mais il est clair qu'un seul pourrait suffire à ces deux types de tâches.

On observe également que le support de données 10 est par ailleurs pourvu de moyens d'ouverture à distance 112 d'au moins un ouvrant du véhicule automobile. Dans cet exemple, la fonction ouverture ne concerne que le coffre du véhicule automobile. Elle est commandée par un bouton qui pourrait cependant être également utilisé pour commander la fermeture à distance de ce même ouvrant, voir de plusieurs autres.

Il est à noter que les moyens de verrouillage à distance 110, les moyens de déverrouillage à distance 111 et que les moyens d'ouverture à distance 112 fonctionnent tous ici par radiofréquence.

La figure 9 montre quant à elle l'intérieur du support de données 10. On distingue tout d'abord la présence d'un accumulateur d'alimentation 120 qui est avant tout destiné à alimenter électriquement la fonction radiofréquence du support de données 10, c'est-à-dire en l'occurrence l'antenne 41 des moyens de transmission sans contact 40.

Il est à noter que de manière complémentaire ou alternative par rapport à l'accumulateur d'alimentation 120, le support de données 10 peut très bien être pourvu d'au moins une pile d'alimentation. Ce genre de variantes de réalisation est plus particulièrement adapté à un type de configurations couramment appelée mains libres, dans laquelle le support de données 10 et l'unité de commande 20 sont en mesure de communiquer véritablement à distance et n'imposent donc pas d'être juxtaposés à proximité l'un de l'autre. Un tel mode de fonctionnement implique en effet que le support de données 10 puisse disposer d'une grande autonomie énergétique, ce qui conduit à privilégier la pile électrique plutôt que l'accumulateur d'alimentation 120.

Quoi qu'il en soit, il convient dans ce type de configuration de permettre un accès aisé à chaque pile d'alimentation, dans le but de pouvoir procéder le cas échéant à un changement. Ainsi, et selon une particularité de cette variante, le support de données 10 est avantageusement doté d'au moins un oouverde amovible permettant l'accès direct à au moins une pile d'alimentation.

On observe également sur la figure 9 que le support de données 10 comporte une clé de secours amovible 130 qui prend place dans un logement 15 ménagée à l'intérieur dudit support de données 10. Ainsi qu'on peut le voir sur la figure 10, il s'agit d'un logement 15 ouvert dont la forme est sensiblement complémentaire de la lame 131 de la clé de secours amovible 130.

De manière particulièrement avantageuse, le support de données 10 dispose de moyens de verrouillage 140 qui sont à même de bloquer la clé de secours amovible 130 à l'intérieur dans son logement 15. Cette caractéristique permet d'augmenter la fiabilité de l'assemblage par rapport aux systèmes actuels qui sont dépourvus de tout moyens de verrouillage ou qui utilisent de simples clipages.

Dans cet exemple, les moyens de verrouillage 140 comportent un bouton de libération 141 qui est couplé à un moyen de rappel élastique, le tout étant intégré à la clé de secours 130 et classiquement apte à coopérer avec une butée solidaire du support de données 10.

Mais bien entendu, une variante dans laquelle le bouton de libération 141 associé à son moyen de rappel élastique seraient implantés dans le support de données 10, et co-opèreraient avec une butée solidaire de la clé de secours 130, pourrait tout à fait être envisagée. Cette configuration s'avère même plus avantageuse que la première en terme d'encombrement dans la mesure où elle n'entraîne pas modifications dimensionnelles majeures au niveau de la partie externe de la clé de secours 130.

De plus, dans le cas ou le bouton de libération 141 associé a son moyen de rappel élastique seraient implantés dans le support de données 10, ledit bouton poussoir 141 pourrait être utilisé pour activer ou désactiver le moteur du véhicule. Ainsi, la fonction « maintien/libération de la clé de secours » est réalisée par le même bouton que pour le démarrage.

L'avantage de cette solution est qu'il est ainsi possible d'interdire le démarrage du véhicule si la clé de secours 130 n'est pas présente dans le support de données 10.

De plus cette solution permet aussi de rendre impossible le retrait de la clé de secours 130 si le support de données 10 est verrouillé sur, ou par, l'unité de commande 20.

Ces deux point permettent d'éviter la perte de la clé de secours 130. De manière particulièrement avantageuse, la clé de secours amovible peut disposer de moyens de liaison avec un anneau de porte-clé. On pense ici avant tout à un trou ménagé à travers la tête de la clé de secours 130.

Il est à noter que les moyens de traitement 60 peuvent également être avantageusement utilisés pour contrôler la mise en oeuvre du dispositif de démarrage 1, tout au long de la procédure de démarrage moteur. Le but est de connaître l'état du système à chaque instant pour pouvoir informer l'utilisateur de la marche à suivre et/ou des éventuelles anomalies rencontrées. Les informations peuvent par exemple lui être signalées par émission d'un signal sonore, par éclairage d'un témoin, par visualisation sur un afficheur.

Les évènements à surveiller et à signaler peuvent concerner notamment la présence ou l'absence du support de données 10 sur l'unité de commande 20, la reconnaissance effective du support de données 10 par l'unité de commande 20, le verrouillage effectif du support de données 10 sur l'unité de commande 20, l'invitation à retirer le support de données 10 de l'unité de commande 20, etc.

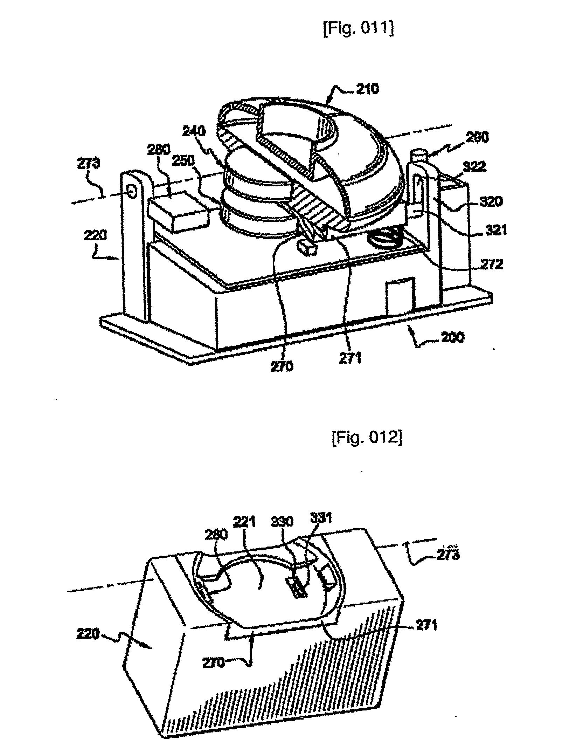

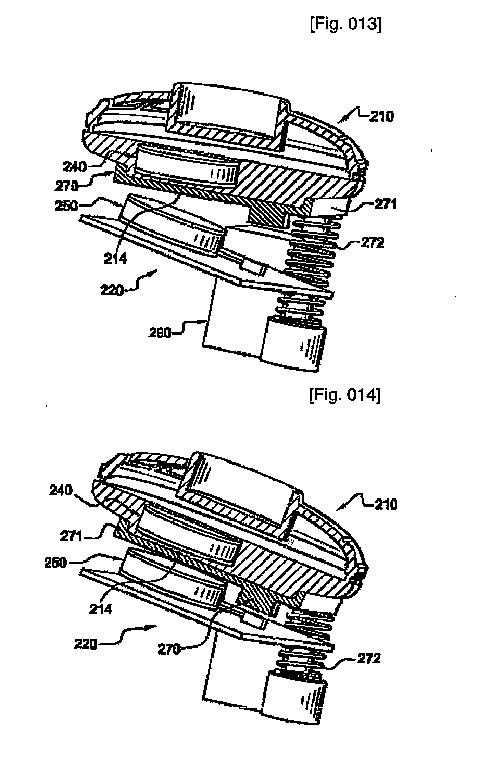

Les figures 11 à 16 montrent un dispositif de démarrage 200 selon un mode de réalisation actuellement préféré de l'invention.

Comme précédemment, on retrouve la combinaison d'un support de données 210 portatif, et d'une unité de commande 220 fixe. Le support de données 210 est là aussi pourvu de moyens de transmission 240, tandis que l'unité de commande 220 est quant à elle toujours dotée de moyens de communication 250, d'un contacteur 270, de moyens de fixation 280 et de moyens de verrouillage 290.

Cependant, ce mode de réalisation se singularise par le fait que le contacteur 270 de l'unité de commande 220 comporte un élément support 271 qui est d'une part doté d'une portion de surface externe, formant surface de positionnement 221, et qui est d'autre part monté mobile en déplacement entre une position de repos rendant inactive la fonction de démarrage et une position déplacée rendant active ladite fonction de démarrage. Ce mode de réalisation est également remarquable en ce que le contacteur 270 est pourvu de moyens de rappel élastique 272 qui sont aptes à entraîner en déplacement l'élément support 271 de sa position déplacée à sa position de repos.

Dans cette configuration, la surface de positionnement 221 est ménagée directement sur une face externe de l'élément support 271. On remarque à cet égard que la surface de positionnement 221 présente une forme sensiblement complémentaire de la face arrière du support de données 210 qui lui est associé. Cette caractéristique, qui permet aux surfaces destinées à venir en regard l'une de l'autre de s'épouser au plus près, participe à la stabilité de la fixation entre le support de données 210 et l'unité de commande 220.

Ainsi qu'on peut le voir sur la figure 12, l'élément support 271 est intégré à l'unité de commande 220 de façon à ce que la surface de positionnement 271 s'étende de manière sensiblement affleurante par rapport à la paroi externe directement adjacente de l'unité de commande 220.

Selon une particularité de ce mode de réalisation, l'unité de commande 220 est pourvue de moyens de butées 320 qui sont en mesure de limiter le déplacement de l'élément support 271 mobile. Conformément à la figure 11, les moyens de butées 320 de cet exemple de réalisation sont classiquement composés d'un élément saillant 321, solidaire de l'élément support 271, qui coulisse dans une lumière 322, ménagée dans le corps de l'unité de commande 220.

Dans ce mode de réalisation préféré, l'élément support 271 est en fait monté mobile en pivotement par rapport au corps de l'unité de commande 220. Mais bien entendu, tout autre mobilité pourrait être envisagée comme par exemple une translation, une rotation ou une combinaison quelconque de ce types de mouvements.

Dans le cas d'un montage pivotant, l'axe de d'articulation 273 de l'élément support 271 est de préférence positionné à proximité d'un bord de l'unité de commande 220. Cette caractéristique permet en effet de maximiser la longueur du bras de levier ainsi constitué, ce qui entraîne avantageusement une minimisation de l'amplitude du débattement. Il est ainsi possible de préserver l'intégrité du contacteur 270.

Ainsi qu'on peut le voir sur la figure 11, l'axe de pivotement 273 de l'élément support 271 est ici ménagé horizontalement, à proximité du bord supérieur de l'unité de commande 220. Ce mode de réalisation préféré permet d'obtenir un basculement vers le bas de l'élément support 271.

De manière particulièrement avantageuse, le support de données 210 est à même de coopérer par contact avec la surface de positionnement 221 ménagée sur l'élément support mobile 271. Cette caractéristique permet de supprimer tout jeu entre le support de données 210 et l'unité de commande 220, pour une stabilité optimale de la fixation entre ces deux éléments.

Selon une autre particularité de ce mode de réalisation, l'unité de commande 220 dispose de moyens d'accouplement 330 qui sont en mesure de recevoir une clé mécanique à transpondeur 340 et de l'immobiliser pendant tout le temps de fonctionnement du moteur.

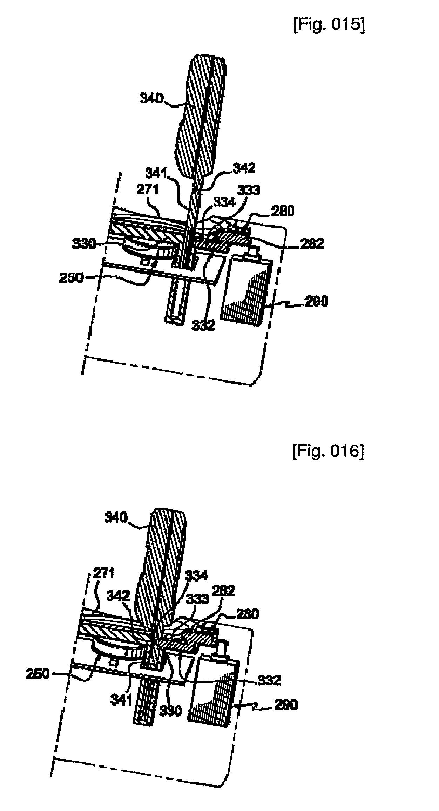

Cette configuration visible aux figures 15 et 16 constitue une alternative pour pouvoir démarrer le moteur en cas de perte ou de disfonctionnement du support de données 210. L'unité de commande 220 est en effet parfaitement en mesure d'identifier le transpondeur d'une clé mécanique 340 de rechange, c'est-à-dire une clé à transpondeur de type standard généralement utilisée comme double. Pour des raisons de normes, il faut simplement l'unité de commande 220 soit à même de bloquer la clé mécanique 340 durant le fonctionnement du moteur.

Ainsi qu'on peut le voir sur la figure 12, les moyens d'accouplement 330 sont tout d'abord dotés d'une ouverture 331 qui est ménagée à travers une paroi externe de l'unité de commande 220, en l'occurrence à travers l'élément support 271, et dans laquelle la lame 341 de la clé mécanique 340 est en mesure d'être insérée. Conformément aux figures 15 et 16, les moyens d'accouplement 330 sont en outre pourvus d'au moins un organe de verrouillage 332 qui est à même de bloquer la clé mécanique 340 à l'intérieur de l'unité de commande 220.

Dans ce mode particulier de réalisation, il n'est question que d'un organe de verrouillage 332 unique, qui comporte un élément de blocage 333 monté mobile en déplacement entre une position engagée et une position de retrait, ainsi qu'un moyen de rappel élastique permettant d'entraîner l'élément de blocage 333 de sa position de retrait à sa position engagée. L'ensemble est agencé de manière à ce qu'en position engagée et une position de retrait, l'extrémité distale 334 de l'élément de blocage 333 soit respectivement en mesure de s'emboîter et de se positionner à distance d'une partie 342 de la clé mécanique 340 de forme sensiblement complémentaire.

On observe sur les figures 15 et 16 que l'élément de blocage 333 est ici directement solidaire de l'élément de maintien 282. Cette caractéristique lui permet de pouvoir bénéficier à la fois de l'action des moyens de rappel élastique des moyens de fixation 280 pour être entraîné vers la position engagée, et de l'action des moyens de blocage 290 pour pouvoir verrouiller la clé mécanique 340 consécutivement à sa propre immobilisation (figure 16).

Bien entendu, l'invention concerne également tout véhicule automobile comportant au moins un dispositif de démarrage 200 tel que précédemment décrit.

## Revendications

1. Dispositif de démarrage (1, 200) pour véhicule automobile, comportant un support de données portatif (10, 210) qui est apte à être couplé à une unité de commande (20, 220) destinée à être intégré au véhicule automobile, le support de données (10, 210) comportant des moyens de stockage de données (30) représentatives notamment du véhicule automobile, ainsi que des moyens de transmission sans contact (40, 140) de ces données, l'unité de commande (20, 220) comportant des moyens de communication sans contact (50, 250) permettant notamment de lire les données contenues dans le support de données (10, 210), des moyens de traitement des données (60) permettant d'autoriser la mise en oeuvre du moteur équipant le véhicule automobile, ainsi qu'un contacteur (70, 270) permettant de commander la mise en oeuvre effective dudit moteur, le support de données (10, 210) étant apte à être solidarisé de manière amovible contre une paroi externe de l'unité de commande (20, 220), au niveau d'une portion de surface dite de positionnement (21, 221), l'activation du contacteur (70, 270) s'effectuant en agissant directement sur le support de données (10, 210) lorsque ce dernier est solidarisé à ladite unité de commande (20, 220), **caractérisé en ce que** le contacteur (270) de l'unité de commande (220) comporte, d'une part, un élément support (271) qui est doté d'une portion de surface externe, formant surface de positionnement (221), et qui est monté mobile en déplacement entre une position de repos rendant inactive la fonction de démarrage et une position déplacée rendant active ladite fonction de démarrage, et d'autre part, des moyens de rappel élastique (272) qui sont aptes à entraîner en déplacement l'élément support (271) de sa position déplacée à sa position de repos.

2. Dispositif de démarrage (1, 200) selon la revendication 1, **caractérisé en ce que** l'activation du contacteur (70, 270) s'effectue en déplaçant au moins une partie du support de données (10, 210) par rapport à l'unité de commande (20, 220), lorsque ledit support de données (10, 210) est solidarisé à ladite unité de commande (20, 220).

3. Dispositif de démarrage (1, 200) selon l'une des revendications 1 ou 2, **caractérisé en ce que** l'activation du contacteur (70, 270) s'effectue en exerçant une poussée sur au moins une partie du support de données (10, 210), lorsque ce dernier est solidarisé à l'unité de commande (20, 220).

4. Dispositif de démarrage (200) selon l'une des revendications précédentes, **caractérisé en ce que** la surface de positionnement (221), qui est ménagée sur une face externe de l'élément support (271), s'étend de manière sensiblement affleurante par rapport à la paroi externe de l'unité de commande (220) qui est directement adjacente.

5. Dispositif de démarrage (200) selon l'une des revendications 1 ou 4, **caractérisé en ce que** l'unité de commande (220) comporte des moyens de butées (280) aptes à limiter le déplacement de l'élément support (271) mobile.

6. Dispositif de démarrage (200) selon l'une quelconque des revendications 4 à 5, **caractérisé en ce que** l'élément support (271) est monté mobile en pivotement par rapport au corps de l'unité de commande (220).

7. Dispositif de démarrage (200) selon la revendication 6, **caractérisé en ce que** l'axe de pivotement (273) de l'élément support (271) est positionné à proximité d'un bord de l'unité de commande (220).

8. Dispositif de démarrage (200) selon l'une des revendications 6 ou 7, **caractérisé en ce que** l'axe de pivotement (273) de l'élément support (271) est ménagé horizontalement, à proximité du bord supérieur de l'unité de commande (220).

9. Dispositif de démarrage (200) selon l'une quelconque des revendications 1 ou 4 à 8, **caractérisé en ce que** le support de données (210) est apte à coopérer par contact avec la surface de positionnement (221) ménagée sur l'élément support (271) mobile.

10. Dispositif de démarrage (1) selon l'une quelconque des revendications 1 à 3, **caractérisé en ce que** le contacteur (70) de l'unité de commande (20) comporte, d'une part, un élément de commande (71) qui est monté mobile en déplacement entre une position relevée rendant inactive la fonction de démarrage et une position enfoncée rendant active ladite fonction de démarrage, et d'autre part, des moyens de rappel élastique (72) qui sont aptes à entraîner en déplacement l'élément de commande (71) de sa position enfoncée à sa position relevée, ledit élément de commande (71) comportant une extrémité libre (73) qui, en position relevée, débouche de manière sensiblement affleurante au niveau de la surface de positionnement (21) et qui, en position enfoncée, est insérée à l'intérieur de l'unité de commande (20).

11. Dispositif de démarrage (1) selon l'une quelconque des revendications 1, 2, 3, ensemble avec la revendication 10, **caractérisé en ce que** le support de données (10) comporte, d'une part, un bouton poussoir (100) dont deux extrémités libres (101, 102) débouchent respectivement au niveau de la face avant (13) et de la face arrière (14) dudit support de données (10), le bouton poussoir (100) étant monté mobile en déplacement entre une position relevée dans laquelle il est intégré sensiblement en totalité à l'intérieur du support de données (10), avec au moins son extrémité libre avant (101) s'étendant de manière sensiblement affleurante par rapport à la face avant (13), et une position enfoncée dans laquelle son extrémité libre arrière (102) s'étend en saillie par rapport à la face arrière (14), et d'autre part, des moyens de rappel élastique (103) qui sont aptes à entraîner en déplacement le bouton poussoir (100) de sa position enfoncée à sa position relevée.

12. Dispositif de démarrage (1) selon la revendication 11, **caractérisé en ce que** le déplacement du bouton poussoir (100) entre sa position relevée et sa position enfoncée est apte à entraîner le déplacement de l'élément de commande (71) entre sa position relevée et sa position enfoncée, lorsque le support de données (10) est solidarisé au niveau de la surface de positionnement (21) de l'unité de commande (20).

13. Dispositif de démarrage (1, 200) selon l'une des revendications 11 ou 12, **caractérisé en ce que** le bouton poussoir (100) du support de données (10) coopère par contact permanent avec l'élément de commande (71) de l'unité de commande (20), lorsque ledit support de données (10) est solidarisé au niveau de la surface de positionnement (21) de ladite unité de commande (20).

14. Dispositif de démarrage (1, 200) selon l'une quelconque des revendications 1 à 13, **caractérisé en ce que** l'unité de commande (20, 220) comporte des moyens de fixation (80, 280) aptes à maintenir le support de données (10, 210) en regard de la surface de positionnement (21, 221).

15. Dispositif de démarrage (1, 200) selon la revendication 14, **caractérisé en ce que** les moyens de fixation (80, 280) comportent au moins un élément de maintien (81, 82) monté mobile en déplacement entre une position déployée dans laquelle son extrémité distale (83, 84) est apte à coopérer par emboîtement avec une portion d'ancrage (11, 12) du support de données (10, 210), de forme sensiblement complémentaire, et une position rétractée dans laquelle ladite extrémité distale (83, 84) est disposée à distance de ladite portion d'ancrage (11, 12), chaque élément de maintien (81, 82) étant entraîné en déplacement de sa position rétractée à sa position déployée par des moyens de rappels élastique (85, 86).

16. Dispositif de démarrage (1, 200) selon l'une quelconque des revendications 1 à 15, **caractérisé en ce que** l'unité de commande (20, 220) comporte des moyens de verrouillage (90, 290) aptes à interdire toute désolidarisation du support de données (10, 210) lorsque ce dernier est maintenu par les moyens de fixation (80, 280) en regard de la surface de positionnement (21, 221).

17. Dispositif de démarrage (1, 200) selon la revendication 16, **caractérisé en ce que** les moyens de verrouillage (90, 290) sont aptes à bloquer au moins un élément de maintien (81, 82) en position déployée.

18. Dispositif de démarrage (1, 200) selon l'une des revendications 16 ou 17, **caractérisé en ce que** les moyens de verrouillage (90, 290) sont aptes à être mis en oeuvre avant le démarrage effectif du moteur du véhicule automobile.

19. Dispositif de démarrage (1, 200) selon l'une quelconque des revendications 1 à 18, **caractérisé en ce que** le support de données (10, 210) comporte des moyens de verrouillage à distance (110) d'au moins un ouvrant du véhicule automobile.

20. Dispositif de démarrage (1, 200) selon l'une quelconque des revendications 1 à 19, **caractérisé en ce que** le support de données (10, 210) comporte des moyens de déverrouillage à distance (111) d'au moins un ouvrant du véhicule automobile.

21. Dispositif de démarrage (1, 200) selon l'une quelconque des revendications 1 à 20, **caractérisé en ce que** le support de données comporte des moyens d'ouverture à distance (112) d'au moins un ouvrant du véhicule automobile.

22. Dispositif de démarrage (1, 200) selon l'une quelconque des revendications 1 à 21, **caractérisé en ce que** le support de données comporte des moyens de fermeture à distance d'au moins un ouvrant du véhicule automobile.

23. Dispositif de démarrage (1, 200) selon l'une quelconque des revendications 1 à 22, **caractérisé en ce que** le support de données (10, 210) comporte au moins un accumulateur d'alimentation (120).

24. Dispositif de démarrage (1, 200) selon l'une quelconque des revendications 1 à 23, **caractérisé en ce que** le support de données (10, 210) comporte au moins une pile d'alimentation.

25. Dispositif de démarrage (1, 200) selon la revendication 24, **caractérisé en ce que** le support de données (10, 210) comporte au moins un couvercle amovible permettant l'accès à au moins une pile d'alimentation.

26. Dispositif de démarrage (1, 200) selon l'une quelconque des revendications 1 à 25, **caractérisé en ce que** le support de données (10, 210) comporte une clé de secours amovible (130) prenant place dans un logement (15) ménagé à l'intérieur dudit support de données (10, 210).

27. Dispositif de démarrage (1, 200) selon la revendication 26, **caractérisé en ce que** le support de données (10, 210) comporte des moyens de verrouillage (140) aptes à bloquer la clé de secours (130) à l'intérieur dans son logement (15).

28. Dispositif de démarrage (1, 200) selon l'une des revendications 26 ou 27, **caractérisé en ce que** la clé de secours (140) comporte des moyens de liaison avec un anneau de porte-clé.

29. Dispositif de démarrage (1, 200) selon l'une quelconque des revendications 1 à 28, **caractérisé en ce que** l'unité de commande (20, 220) comporte des moyens d'accouplement (330) aptes à recevoir une clé mécanique à transpondeur (340) et à l'immobiliser pendant le temps de fonctionnement du moteur.

30. Dispositif de démarrage (1, 200) selon la revendication 29, **caractérisé en ce que** les moyens d'accouplement (330) comportent, d'une part, une ouverture (331) qui est ménagée à travers une paroi externe de l'unité de commande (220) et dans laquelle la clé mécanique (340) est apte à être insérée, et d'autre, au moins un organe de verrouillage (332) apte à bloquer ladite clé mécanique (340) à l'intérieur de ladite unité de commande (220)

31. Dispositif de démarrage (1, 200) selon la revendication 30, **caractérisé en ce que** chaque organe de verrouillage (332) comporte, d'une part, un élément de blocage (333) monté mobile en déplacement entre une position engagée et une position de retrait dans lesquelles son extrémité distale (334) est respectivement apte à s'emboîter et se positionner à distance d'une partie (342) de la clé (340) de forme sensiblement complémentaire, et d'autre part, un moyen de rappel élastique apte à entraîner l'élément de blocage (333) de sa position de retrait à sa position engagée.

32. Dispositif de démarrage (1, 200) selon l'une quelconque des revendications 1 à 31, **caractérisé en ce que** la surface de positionnement (21, 221) présente une forme sensiblement complémentaire de la face arrière (14, 214) du support de données (10, 210).

33. Véhicule automobile, **caractérisé en ce qu'**il comporte au moins un dispositif de démarrage (1, 200) selon l'une quelconque des revendications précédentes.

## Claims

1. A start-up device (1, 200) for motorcar, including a portable data support (10, 210) that can be connected to a control unit (20, 220) intended to be integrated into a motorcar, the data support (10, 210) including storage means for representative data (30) of the motorcar in particular, as well as contactless transmission means (40, 140) for this data, the control unit (20, 220) including contactless communication means (50, 250) allowing the reading of the data contained in the data support (10, 210) in particular, data processing means (60) allowing the start-up of the engine fitted in the motorcar, as well as a contactor (70, 270) allowing effective start-up of said engine, the data support (10, 210) featuring the capacity to be removably installed against an external face of the control unit (20, 220), at a so-called positioning surface section (21, 221), activation of the contactor (70, 270) being obtained by direct action on the data support (10, 210) when same is fitted to said control unit (20, 220), **characterised in that** the contactor (270) of the control unit (220) includes a support element (271) fitted with an external surface section, making up a positioning surface (221), and installed so as to be able to move from a standby position making start-up function inactive to a shifted position making said start-up function active, on the one hand, and spring return means (272) able to make the support element (271) move from its shifted position to its standby position, on the other hand.

2. A start-up device (1, 200) according to claim 1, **characterised in that** activation of the contactor (70, 270) is obtained by moving at least a part of the data support (10, 210) with respect to the control unit (20, 220), when said data support (10, 210) is installed on said control unit (20, 220).

3. A start-up device (1, 200) according to one of claims 1 or 2, **characterised in that** activation of the contactor (70, 270) is obtained by pushing at least a part of the data support (10, 210), when same is installed on the control unit (20, 220).

4. A start-up device (200) according to one of the previous claims, **characterised in that** the positioning surface (221), which is arranged on an external face of the support element (271), spreads in an approximately flushing way with respect to the directly adjacent external face of the control unit (220).

5. A start-up device (200) according to one of claims 1 or 4, **characterised in that** the control unit (220) includes stop means (280) able to limit the movement of the mobile support element (271).

6. A start-up device (200) according to any of claims 4 to 5, **characterised in that** the installation of the support element (271) allows its rotation with respect the body of the control unit (220).

7. A start-up device (200) according to claim 6, **characterised in that** the rotation pin (273) of the support element (271) is located close to an edge of the control unit (220).

8. A start-up device (200) according to one of claims 6 or 7, **characterised in that** the rotation pin (273) of the support element (271) is installed horizontally, close to the upper edge of the control unit (220).

9. A start-up device (200) according to any of claims 1 or 4 to 8, **characterised in that** the data support (210) can cooperate through contact with the positioning surface (221) arranged on the mobile support element (271).

10. A start-up device (1) according to any of claims 1 to 3, **characterised in that** the contactor (70) of the control unit (20) includes a control element (71) installed so as to move between a raised position disabling start-up function and a depressed position enabling said start-up function, on the one hand, and spring return means (72) able to make the control element (71) move from its depressed position to its raised position, said control element (71) including a free end (73) which, when in raised position, emerges in an approximately flushing manner at the positioning surface (21) and which, in depressed position, is inserted inside the control unit (20), on the other hand.

11. A start-up device (1) according to any of claims 1, 2, 3, together with claim 10, **characterised in that** the data support (10) includes a push-button (100), two free ends (101, 102) of which emerge at the front face (13) and the rear face (14), respectively, of said data support (10), the push-button (100) being installed so as to move from a raised position in which it is approximately totally integrated inside the data support (10), with at least its free front end (101) spreading in an approximately flushing manner with respect to the front face (13), to a depressed position in which its free rear end (102) is protruding with respect to the rear face (14), on the one hand, and spring return means (103) able to make the push-button (100) move from its depressed position to its raised position, on the other hand.

12. A start-up device (1) according to claim 11, **characterised in that** the movement of the push-button (100) from its raised position to its depressed position can make the control element (71) move from its raised position to its depressed position, when the data support (10) is installed on the positioning surface (21) of the control unit (20).

13. A start-up device (1, 200) according to one of claims 11 or 12, **characterised in that** the push-button (100) of the data support (10) cooperates through permanent contact with the control element (71) of the control unit (20), when said data support (10) is installed at positioning surface (21) of said control unit (20).

14. A start-up device (1, 200) according to any of claims 1 to 13, **characterised in that** the control unit (20, 220) includes attachment means (80, 280) able to maintain data support (10, 210) with respect to the positioning surface (21, 221).

15. A start-up device (1, 200) according to claim 14, **characterised in that** the attachment means (80, 280) include at least one support element (81, 82) installed so as to move from an extended position in which its far end (83, 84) can cooperate through fitting with an anchoring section (11, 12) of the data support (10, 210), with an approximately complementary shape, to a retracted position in which said far end (83, 84) is located at a distance from said anchoring section (11, 12), each support element (81, 82) being moved from its retracted position to its extended position by spring return means (85, 86).

16. A start-up device (1, 200) according to any of claims 1 to 15, **characterised in that** the control unit (20, 220) includes locking means (90, 290) able to prevent any separation from the data support (10, 210) when same is held by the attachment means (80, 280) with respect to the positioning surface (21, 221).

17. A start-up device (1, 200) according to claim 16, **characterised in that** the locking means (90, 290) can block at least one support element (81, 82) in extended position.

18. A start-up device (1, 200) according to one of claims 16 or 17, **characterised in that** the locking means (90, 290) can be implemented before effective start-up of the motorcar engine.

19. A start-up device (1, 200) according to any of claims 1 to 18, **characterised in that** the data support (10, 210) includes remove locking means (110) for at least one door of the motorcar.

20. A start-up device (1, 200) according to any of claims 1 to 19, **characterised in that** the data support (10, 210) includes remote unlocking means (111) for at least one door of the motorcar.

21. A start-up device (1, 200) according to any of claims 1 to 20, **characterised in that** the data support includes remote opening means (112) for at least one door of the motorcar.

22. A start-up device (1, 200) according to any of claims 1 to 21, **characterised in that** the data support includes remote shutting means for at least one door of the motorcar.

23. A start-up device (1, 200) according to any of claims 1 to 22, **characterised in that** the data support (10, 210) includes at least one supply accumulator (120).

24. A start-up device (1, 200) according to any of claims 1 to 23, **characterised in that** the data support (10, 210) includes at least one supply battery.

25. A start-up device (1, 200) according to claim 24, **characterised in that** the data support (10, 210) includes at least one removable cover giving access to at least a supply battery.

26. A start-up device (1, 200) according to any of claims 1 to 25, **characterised in that** the data support (10, 210) includes a removable backup key (130) located in a housing (15) arranged inside said data support (10, 210).

27. A start-up device (1, 200) according to claim 26, **characterised in that** the data support (10, 210) includes locking means (140) able to block the backup key (130) inside its housing (15).

28. A start-up device (1, 200) according to one of claims 26 or 27, **characterised in that** the backup key (140) includes linking means with a key-ring.

29. A start-up device (1, 200) according to any of claims 1 to 28, **characterised in that** the control unit (20, 220) includes coupling means (330) able to receive a transponder mechanical key (340) and immobilise it while the engine is operating.

30. A start-up device (1, 200) according to claim 29, **characterised in that** the coupling means (330) include an opening (331) arranged through an external face of the control unit (220) and in which the mechanical key (340) can be inserted, on the one hand, and at least one locking element (332) able to block said mechanical key (340) inside said control unit (220), on the other hand.

31. A start-up device (1, 200) according to claim 30, **characterised in that** each locking element (332) includes a blocking element (333) installed so as to move from an inserted position to a retracted position in which its far end (334) can respectively fit into and be located at a distance from a part (342) of the key (340) whose shape is approximately complementary, on the one hand, and a spring return means able to move the blocking element (333) form its retracted position to its inserted position, on the other hand.

32. A start-up device (1, 200) according to any of claims 1 to 31, **characterised in that** the positioning surface (21, 221) features a shape approximately complementary to the rear face (14, 214) of the data support (10, 210).

33. A motorcar, **characterised in that** it includes at least one start-up device (1, 200) according to any of the abovementioned claims.

## Patentansprüche

1. Startvorrichtung (1, 200) für Kraftfahrzeuge, mit einem tragbaren Datenträger (10, 210), der mit einer Steuereinheit (20, 220) koppelbar ist, die zum Einbau in das Kraftfahrzeug bestimmt ist, wobei der Datenträger (10, 210) Mittel (30) zum Speichern von insbesondere für das Kraftfahrzeug repräsentativen Daten sowie Mittel (40, 140) zum kontaktlosen Übertragen dieser Daten aufweist, wobei die Steuereinheit (20, 220) kontaktlose Kommunikationsmittel (50, 250) enthält, die insbesondere das Auslesen der in dem Datenträger (10, 210) enthaltenen Daten ermöglichen, wobei Datenverarbeitungsmittel (60) das Einschalten des Motors gestatten können, mit dem das Kraftfahrzeug ausgerüstet ist, sowie einen Kontaktgeber (70, 270), der ermöglicht, das effektive Einschalten des Motors zu steuern, wobei der Datenträger (10, 210) abnehmbar an einer Außenwand der Steuereinheit (20, 220) im Bereich eines sogenannten Positionierflächenabschnitts (21, 221) befestigt werden kann, wobei die Aktivierung des Kontaktgebers (70, 270) dadurch erfolgt, dass direkt auf den Datenträger (10, 210) eingewirkt wird, wenn letzterer mit der Steuereinheit (20, 220) verbunden ist, **dadurch gekennzeichnet, dass** der Kontaktgeber (270) der Steuereinheit (220) einerseits ein Abstützelement (271) enthält, das mit einem Außenflächenabschnitt versehen ist, der eine Positionierfläche (221) bildet, und das zwischen einer Ruhestellung, in welcher die Startfunktion inaktiviert ist, und einer Verlagerungsstellung verstellbar montiert ist, in welcher die Startfunktion aktiviert ist, sowie andererseits Federrückstellmittel (272), die das Abstützelement (271) aus seiner Verlagerungsstellung in seine Ruhestellung mitnehmen können.

2. Startvorrichtung (1, 200) nach Anspruch 1, **dadurch gekennzeichnet, dass** die Aktivierung des Kontaktgebers (70, 270) durch Verlagerung zumindest eines Teils des Datenträgers (10, 210) bezüglich der Steuereinheit (20, 220) erfolgt, wenn der Datenträger (10, 210) mit der Steuereinheit (20, 220) verbunden ist.

3. Startvorrichtung (1, 200) nach einem der Ansprüche 1 oder 2, **dadurch gekennzeichnet, dass** die Aktivierung des Kontaktgebers (70, 270) durch Ausüben einer Schubkraft auf zumindest einen Teil des Datenträgers (10, 210) erfolgt, wenn letzterer mit der Steuereinheit (20, 220) verbunden ist.

4. Startvorrichtung (200) nach einem der vorangehenden Ansprüche, **dadurch gekennzeichnet, dass** die Positionierfläche (221), die an einer Außenseite des Abstützelements (271) ausgebildet ist, im wesentlichen bündig mit der unmittelbar angrenzenden Außenwand der Steuereinheit (220) verläuft.

5. Startvorrichtung (200) nach einem der Ansprüche 1 oder 4, **dadurch gekennzeichnet, dass** die Steuereinheit (220) Anschlagmittel (280) aufweist, welche die Verlagerung des beweglichen Abstützelements (271) begrenzen können.

6. Startvorrichtung (200) nach einem der Ansprüche 4 bis 5, **dadurch gekennzeichnet, dass** das Abstützelement (271) bezüglich des Körpers der Steuereinheit (220) verschwenkbar gelagert ist.

7. Startvorrichtung (200) nach Anspruch 6, **dadurch gekennzeichnet, dass** die Schwenkachse (273) des Abstützelements (271) in Randnähe der Steuereinheit (220) positioniert ist.

8. Startvorrichtung (200) nach einem der Ansprüche 6 oder 7, **dadurch gekennzeichnet, dass** die Schwenkachse (273) des Abstützelements (271) waagrecht in der Nähe des oberen Randes der Steuereinheit (220) ausgebildet ist.

9. Startvorrichtung (200) nach einem der Ansprüche 1 oder 4 bis 8, **dadurch gekennzeichnet, dass** der Datenträger (210) durch Kontakt mit der am beweglichen Abstützelement (271) ausgebildeten Positionierfläche (221) zusammenwirkt.

10. Startvorrichtung (1) nach einem der Ansprüche 1 bis 3, **dadurch gekennzeichnet, dass** der Kontaktgeber (70) der Steuereinheit (20) einerseits ein Steuerelement (71) enthält, das zwischen einer angehobenen Stellung, in welcher die Startfunktion inaktiviert ist, und einer eingedrückten Stellung verstellbar gelagert ist, in welcher die Startfunktion aktiviert ist, sowie andererseits Federrückstellmittel (72), welche das Steuerelement (71) aus seiner eingedrückten Stellung in seine angehobene Stellung mitnehmen können, wobei das Steuerelement (71) ein freies Ende (73) aufweist, das in der angehobenen Stellung im wesentlichen bündig in den Bereich der Positionierfläche (21) mündet und in eingedrückter Stellung innerhalb der Steuereinheit (20) eingefügt ist.

11. Startvorrichtung (1) nach einem der Ansprüche 1, 2, 3, zusammengenommen mit Anspruch 10, **dadurch gekennzeichnet, dass** der Datenträger (10) einerseits einen Druckknopf (100) aufweist, dessen beide freie Enden (101, 102) in den Bereich der Vorderseite (13) bzw. der Rückseite (14) des Datenträgers (10) münden, wobei der Druckknopf (100) zwischen einer angehobenen Stellung, in welcher er zumindest mit seinem freien vorderen Ende (102), das sich im wesentlichen bündig zur Vorderseite (13) erstreckt, im wesentlichen vollständig innerhalb des Datenträgers (10) integriert ist, und einer eingedrückten Stellung verstellbar gelagert ist, in welcher er sich mit seinem freien hinteren Ende (102) bezüglich der Rückseite (14) vorspringend erstreckt, sowie andererseits Federrückstellmittel (103), die den Druckknopf (100) aus seiner eingedrückten Stellung in seine angehobene Stellung mitnehmen können.

12. Startvorrichtung (1) nach Anspruch 11, **dadurch gekennzeichnet, dass** die Verlagerung des Druckknopfs (100) zwischen seiner angehobenen Stellung und seiner eingedrückten Stellung die Verlagerung des Steuerelements (71) zwischen seiner angehobenen Stellung und seiner eingedrückten Stellung bewirken kann, wenn der Datenträger (10) mit dem Bereich der Positionierfläche (21) der Steuereinheit (20) verbunden ist.

13. Startvorrichtung (1, 200) nach einem der Ansprüche 11 oder 12, **dadurch gekennzeichnet, dass** der Druckknopf (100) des Datenträgers (10) durch ständigen Kontakt mit dem Steuerelement (71) der Steuereinheit (20) zusammenwirkt, wenn der Datenträger (10) mit dem Bereich der Positionierfläche (21) der Steuereinheit (20) verbunden ist.

14. Startvorrichtung (1, 200) nach einem der Ansprüche 1 bis 13, **dadurch gekennzeichnet, dass** die Steuereinheit (20, 220) Befestigungsmittel (80, 280) enthält, die den Datenträger (10, 210) der Positionierfläche (21, 221) gegenüberliegend halten können.

15. Startvorrichtung (1, 200) nach Anspruch 14, **dadurch gekennzeichnet, dass** die Befestigungsmittel (80, 280) zumindest ein Halteelement (81, 82) aufweisen, das zwischen einer ausgefahrenen Stellung, in welcher sein distales Ende (83, 84) durch Eingreifen mit einem in seiner Form im wesentlichen komplementären Verankerungsabschnitt (11, 12) des Datenträgers (10, 210) zusammenwirken kann, und einer eingefahrenen Stellung verstellbar gelagert ist, in welcher das distale Ende (83, 84) vom Verankerungsabschnitt (11, 12) beabstandet ist, wobei jedes Haltelement (81, 82) über Federrückstellmittel (85, 86) aus seiner eingefahrenen Stellung in seine ausgefahrene Stellung mitgenommen wird.

16. Startvorrichtung (1, 200) nach einem der Ansprüche 1 bis 15, **dadurch gekennzeichnet, dass** die Steuereinheit (20, 220) Verriegelungsmittel (90, 290) aufweist, die jegliches Lösen des Datenträgers (10, 210) unterbinden können, wenn letzterer über die Befestigungsmittel (80, 280) der Positionierfläche (21, 221) gegenüberliegend gehalten wird.

17. Startvorrichtung (1, 200) nach Anspruch 16, **dadurch gekennzeichnet, dass** die Verriegelungsmittel (90, 290) zumindest ein Halteelement (81, 82) in ausgefahrener Stellung sichern können.

18. Startvorrichtung (1, 200) nach einem der Ansprüche 16 oder 17, **dadurch gekennzeichnet, dass** die Verriegelungsmittel (90, 290) vor dem effektiven Starten des Motors des Kraftfahrzeugs einsetzbar sind.

19. Startvorrichtung (1, 200) nach einem der Ansprüche 1 bis 18, **dadurch gekennzeichnet, dass** der Datenträger (10, 210) Fernverriegelungsmittel (110) zum Verriegeln zumindest einer Tür des Kraftfahrzeugs aufweist.

20. Startvorrichtung (1, 200) nach einem der Ansprüche 1 bis 19, **dadurch gekennzeichnet, dass** der Datenträger (10, 210) Fernentriegelungsmittel (111) zum Entriegeln zumindest einer Tür des Kraftfahrzeugs aufweist.

21. Startvorrichtung (1, 200) nach einem der Ansprüche 1 bis 20, **dadurch gekennzeichnet, dass** der Datenträger Fernöffnungsmittel (112) zum Öffnen zumindest einer Tür des Kraftfahrzeugs aufweist.

22. Startvorrichtung (1, 200) nach einem der Ansprüche 1 bis 21, **dadurch gekennzeichnet, dass** der Datenträger Fernschließmittel zum Verschließen zumindest einer Tür des Kraftfahrzeugs aufweist.

23. Startvorrichtung (1, 200) nach einem der Ansprüche 1 bis 22, **dadurch gekennzeichnet, dass** der Datenträger (10, 210) zumindest einen Stromversorgungsakkumulator (120) aufweist.

24. Startvorrichtung (1, 200) nach einem der Ansprüche 1 bis 23, **dadurch gekennzeichnet, dass** der Datenträger (10, 210) zumindest eine Stromversorgungsbatterie aufweist.

25. Startvorrichtung (1, 200) nach Anspruch 24, **dadurch gekennzeichnet, dass** der Datenträger (10, 210) zumindest einen abnehmbaren Deckel aufweist, der den Zugang zu zumindest einer Stromversorgungsbatterie ermöglicht.

26. Startvorrichtung (1, 200) nach einem der Ansprüche 1 bis 25, **dadurch gekennzeichnet, dass** der Datenträger (10, 210) einen abnehmbaren Notschlüssel (130) aufweist, der in einer innerhalb des Datenträgers (10, 210) ausgebildeten Aufnahme Platz findet.

27. Startvorrichtung (1, 200) nach Ansprüche 26, **dadurch gekennzeichnet, dass** der Datenträger (10, 210) Verriegelungsmittel (140) aufweist, welche den Notschlüssel (130) innerhalb seiner Aufnahme (15) sichern können.

28. Startvorrichtung (1, 200) nach einem der Ansprüche 26 oder 27, **dadurch gekennzeichnet, dass** der Notschlüssel (140) Mittel zum Verbinden mit einem Schlüsselhaltering aufweist.

29. Startvorrichtung (1, 200) nach einem der Ansprüche 1 bis 28, **dadurch gekennzeichnet, dass** die Steuereinheit (20, 220) Kupplungsmittel (330) aufweist, die einen mechanischen Schlüssel mit Transponder (340) aufnehmen können und diesen während der Motorbetriebszeit festlegen können.

30. Startvorrichtung (1, 200) nach Anspruch 29, **dadurch gekennzeichnet, dass** die Kupplungsmittel (330) einerseits eine Öffnung (331) aufweisen, die durch eine Außenwand der Steuereinheit (220) hindurch ausgeführt ist und in welcher der mechanische Schlüssel (340) eingeführt werden kann, sowie andererseits zumindest ein Verriegelungsglied (332), das den mechanischen Schlüssel (340) innerhalb der Steuereinheit (220) sichern kann.

31. Startvorrichtung (1, 200) nach Anspruch 30, **dadurch gekennzeichnet, dass** jedes Verriegelungsglied (332) einerseits ein Sicherungselement (333) aufweist, das zwischen einer Eingriffsstellung und einer Rückzugsstellung verstellbar gelagert ist, in welchen dessen distales Ende (334) in einen in seiner Form im wesentlichen komplementären Teilbereich (342) des Schlüssels (340) eingreifen bzw. sich davon entfernen kann, sowie andererseits ein Federrückstellmittel, welches das Sicherungselement (333) aus seiner Rückzugsstellung in seine Eingriffsstellung mitnehmen kann.

32. Startvorrichtung (1, 200) nach einem der Ansprüche 1 bis 31, **dadurch gekennzeichnet, dass** die Positionierfläche (21, 221) eine im wesentlichen komplementäre Form zur Rückseite (14, 214) des Datenträgers (10, 210) aufweist.

33. Kraftfahrzeug, **dadurch gekennzeichnet, dass** es zumindest eine Startvorrichtung (1, 200) nach einem der vorangehenden Ansprüche enthält.
